# EUROPEAN PATENT SPECIFICATION

(11) **EP 2 585 750 B1**
(45) Date of publication and mention of the grant of the patent: **18.02.2015**
(21) Application number: 11730774.4
(22) Date of filing: 27.06.2011
(51) Int. Cl.: F16L 27/04, F16L 27/06

(54) **PIPE CONNECTION**
ROHRVERBINDUNG
RACCORD DE TUYAUTERIE

(30) Priority: 28.06.2010 NL 2004985
(43) Date of publication of application: 01.05.2013
(73) Proprietor: Leo Dynamische Investering B.V., 1033 NN Amsterdam (NL)
(72) Inventor: MENHEERE, Marco, Daniël, NL-1402 CT Bussum (NL)
(74) Representative: Nederlandsch Octrooibureau
(86) International application number: PCT/NL2011/050462
(87) International publication number: WO 2012/002805

(56) References cited:
- CH-A- 339 449
- DE-C- 976 049
- GB-A- 896 836
- US-A- 2 085 922
- US-A- 3 275 243
- US-A- 3 746 372
- US-A- 3 993 525
- US-A1- 2005 012 329

## Description

The invention relates to a pipe connection according to the preamble of claim 1. Such pipe connection is disclosed in US-A-399.

A further pipe connection is known from GB-A-896836. In this known pipe connection, a truncated, conical seal is used, which is attached to the free ends of the outermost shell part. The seal lies with the inner surface thereof up against the outer surface of the innermost shell part. However, problems arise in the use of a pipe connection of this type for the transportation of a liquid with abrasive particles, such as dredging spoils. Depending on the rotated position of the shell parts in relation to one another, particles of this type may pass between the shell parts and onto the outer surface of the innermost shell part which must ensure the seal.

As a result, this surface may be subject to wear. The seal may also be subject to wear as a result of turbulence in the dredging spoils flowing through the pipe connection. The continuing intensive exposure to the abrasive components of the dredging spoils can adversely affect the surfaces of the seal to such an extent that the effect thereof is lost as soon as leaks can occur. This is caused above all by the fact that the outer surface of the inner shell part, along which the seal is displaceable, adjoins an open space in which the aforementioned turbulence is further increased.

The object of the invention is therefore to produce a pipe connection of the aforementioned type which is more resistant to the effects of abrasive media. This object is achieved by the characterizing features of claim 1.

In the pipe connection according to the invention, a lining, which is attached to the outermost shell part, extends over the outer surface of the inner shell part. As a result, the space which the sensitive outer surface of the inner shell part adjoins is less readily accessible to the dredging spoils, to such an extent that turbulence and damaging effects of the abrasive particles present in the dredging spoils can be largely avoided. As a result, the surface condition of the outer surface of the innermost shell part can be held for a prolonged period in a position suitable for interworking with the seal. Leakages in the ball joint can thereby also be more effectively prevented.

This favourable effect of the lining is achieved because the lining surface and any outer surface of the inner shell part lie entirely free in relation to one another. In particular, the lining surface and the outer surface of the inner shell part can enclose a gap with an essentially uniform thickness.

The lining is connected to the outermost shell part, and may be displaced with the seal in relation to the innermost shell part. The seal comprises a sealing element connected to the outermost shell part and displaceably interworking with the outer surface of the innermost shell part, and the lining extends between the sealing element of the shell parts and the free end of the outermost shell part.

The lining surface is preferably essentially spherical. In this case, the lining can approach the innermost shell part as closely as possible. According to a further possibility, a flow guide can be provided in the innermost shell part. By means of a flow guide of this type, the dredging spoils flowing through the passage can be guided in such a way that the effect thereof on the integrity of the ball joint is further reduced. The flow guide preferably has a cylindrically and/or spherically curved inner flow guide surface for this purpose.

According to a further favourable design, the flow guide can extend beyond the end of the inner shell part which adjoins the lining. In particular, the flow guide can have a nozzle near the lining, which lies free in relation to the lining surface. This nozzle and the lining surface preferably enclose a gap, the size of which is essentially identical to the size of the gap between the lining surface and the outer surface of the inner shell part. The outer surface of that shell part can be further protected in relation to the flow by this nozzle which protrudes in relation to the innermost shell part. In particular, the flow guide may comprise a flow guide part which is located near to the outermost shell part and is designed as widening in the form of a cone or trumpet. As a result, the nozzle can closely follow the inner surface of the lining in every rotated position of the shell parts in relation to one another. The flow guide and the lining may comprise a plastic material.

The invention will be explained in detail below with reference to an example embodiment shown in the figures.
Figure 1 shows a longitudinal cross-section of a pipe connection according to the invention in the aligned position.
Figure 2 shows a partial longitudinal cross-section of the pipe connection according to the invention in the curved position.
Figure 3 shows an external view of the pipe connection.
Figure 4 shows the detail according to VI from Figure 1 on an enlarged scale.

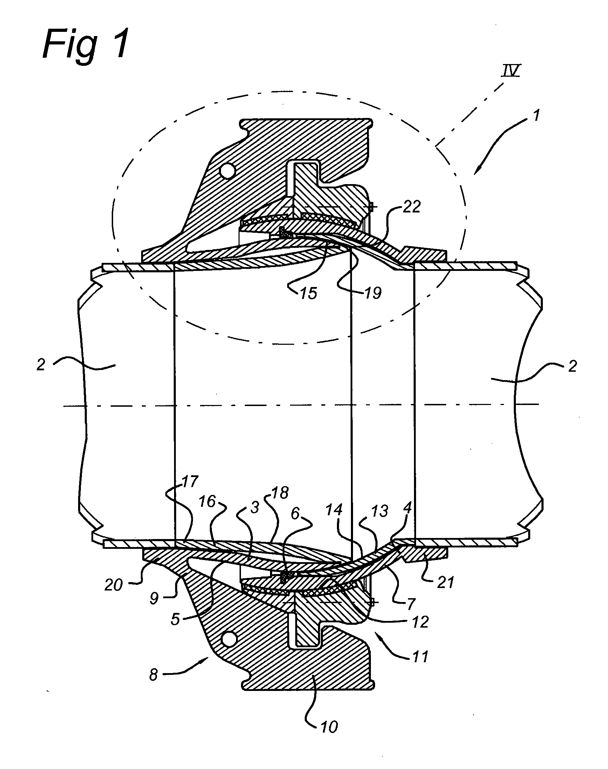

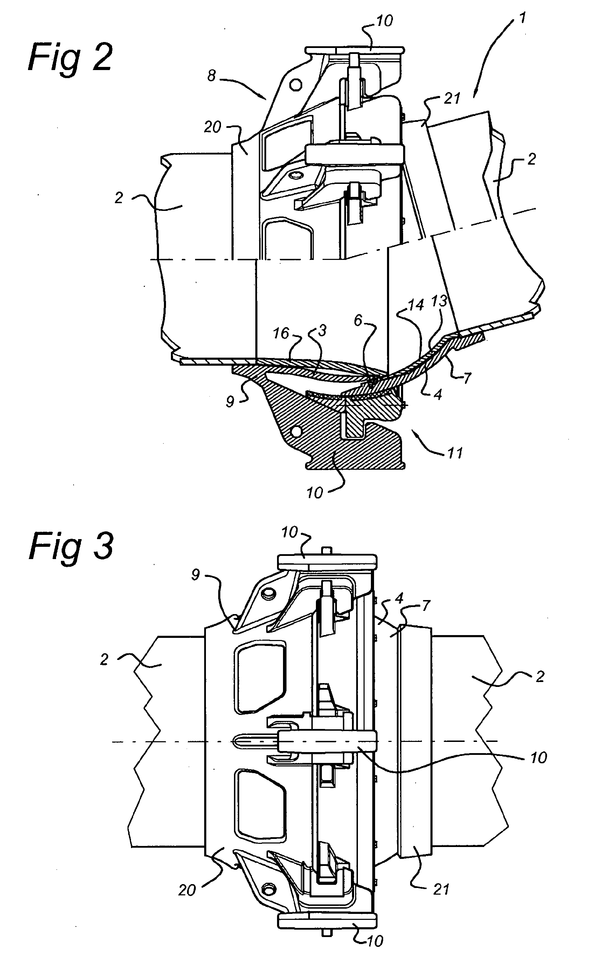

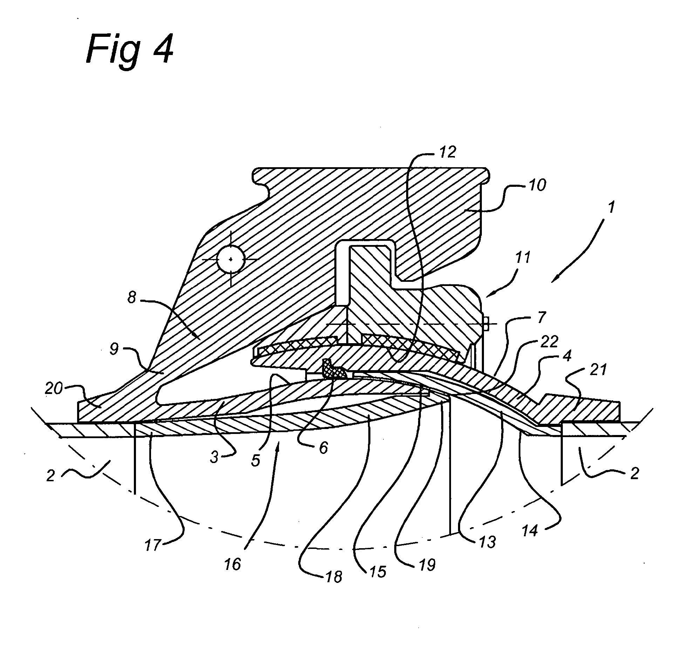

The pipe connection shown in Figures 1-4 comprises the ball joint 1 and the pipes 2 welded firmly thereto. The ball joint 1 comprises the innermost shell part 3 and the outermost shell part 4. The shell parts 3,4 are spherical, wherein the outer surface 5 of the innermost shell part 3 is spherical, and also the outermost surface 7 of the outermost shell part 4. On the inside of the outermost shell part 4, a sealing element 6 is attached which interworks in a sealing and displaceable manner with the spherical outer surface 5 of the innermost shell part 3.

The yoke 8 is attached to the innermost shell part 3. This yoke 8 comprises an annular body 9, on which a number of jaws 10 distributed over the circumference thereof are provided. The jaws 10 interwork with the bush 11, which has an inner hollow surface 12 which has a curvature corresponding to the outer surface 7 of the outermost shell part 4, and wherein the outermost shell part 4 is rotatably held in place in a known manner.

A lining 13 is provided on the inside of the innermost shell part 3. The lining 13 has an inner hollow surface 14, the shape of which corresponds to the spherical shape of the outer surface 5 of the innermost shell part 3. A thin gap 15 is formed between these surfaces 5, 14, said gap having an essentially uniform thickness in the different rotated positions of the shell parts 3, 4 in relation to one another. As a result of the immediate proximity of the lining 13 in relation to the outer surface 5 of the innermost shell part 3, hardly any turbulence can develop in the liquid located there. As a result, that surface 5 will also hardly be touched, and the surface condition thereof will remain suitable for a prolonged period for creating an effective seal with the sealing element 6.

For further improvement of the durability of the pipe connection, a flow guide 16 is provided on the inside of the innermost shell part 3. This flow guide extends from the sleeve 20 of the ring 9 to which the one pipe piece 2 is welded to near the inner surface 14 of the lining 13. Near the inner surface 14, the flow guide 16 changes into a nozzle 19 which lies close up to the surface 14, forming a gap 22. This gap 22 between the nozzle 19 and the lining 13 has a dimension which is roughly as great as that of the gap 15 between the lining 13 and the innermost shell part 3. The flow guide promotes a regular flow of the medium fed through the pipe connection, in such a way that as little turbulence as possible occurs therein. In this context, the flow guide preferably has an essentially cylindrical part 17 close to the sleeve 21, which changes into a part 18 which widens in the form of a trumpet and ends in the nozzle 19.

### List of reference numbers

- 1.: Ball joint
- 2.: Pipe
- 3.: Innermost shell part
- 4.: Outermost shell part
- 5.: Outer surface of innermost shell part
- 6.: Sealing element
- 7.: Outer surface of outermost shell part
- 8.: Yoke
- 9.: Ring
- 10.: Jaw
- 11.: Bush
- 12.: Inner surface of bush
- 13.: Lining
- 14.: Inner surface of lining
- 15.: Gap between lining and inner shell part
- 16.: Flow guide
- 17.: Cylindrical part of flow guide
- 18.: Trumpet-shaped part of flow guide
- 19.: Nozzle of flow guide
- 20.: Sleeve
- 21.: Sleeve
- 22.: Gap between nozzle and lining

## Claims

1. Pipe connection, comprising a ball joint (1) having shell parts (3, 4) surrounding one another in a sealing manner which each define a respective longitudinal centre line and which are rotatable in relation to one another between an aligned position, in which the longitudinal centre lines coincide, and a rotated position, in which the longitudinal centre lines form an angle with one another which differs from zero, wherein the shell parts together enclose an axial passage which extends between sleeves (20, 21) of the shell parts (3, 4) facing away from one another, as well as a respective pipe piece (2) being attached to each sleeve (20, 21), wherein in the outermost shell part (4), a lining (13) is provided, the inner lining surface (14) of which has a curvature-corresponding to the curvature of the outer surface (5) of the inner shell part (3), and a sealing element (6) connected to the outermost shell part and interworking displaceably with the outer surface of the innermost shell part is provided, wherein the lining (13) extends between the sealing element (6) and the sleeve (21) of the outermost shell part (4) **characterized in that** a yoke (8) is attached to the innermost shell part (3), said yoke being provided with a bush (11) with an inner spherical surface (12) which interworks in the manner of a ball and socket joint with an outer spherical surface (7) of the outermost shell part (4) **in that** the lining surface (14) and the outer surface (5) of the inner shell part (3) lie entirely free in relation to one another.

2. Pipe connection according to Claim 1, wherein the lining surface (14) and the outer surface (5) of the inner shell part (3) enclose a gap (15) with an essentially uniform thickness.

3. Pipe connection according to one of the preceding claims, wherein the lining surface (14) is essentially spherical.

4. Pipe connection according to one of the preceding claims, wherein a flow guide (16) is provided in the innermost shell part (3).

5. Pipe connection according to Claim 4, wherein the flow guide (16) has a cylindrically and/or spherically curved inner flow guide surface (17, 18).

6. Pipe connection according to Claim 4 or 5, wherein the flow guide (16) extends beyond the end of the inner shell part (3) which adjoins the lining (13).

7. Pipe connection according to Claim 6, wherein the flow guide has a nozzle (19) which lies free in relation to the lining surface (14).

8. Pipe connection according to Claim 7, wherein the nozzle (19) and the lining surface (14) enclose a gap (22), the size of which is essentially identical to the gap (15) between the lining surface (14) and the outer surface (5) of the inner shell part (3).

9. Pipe connection according to one of Claims 4-8, wherein the flow guide (16) comprises a flow guide part (17) which is located close to the sleeve (20) of the innermost shell part (3) and which is essentially cylindrical.

10. Pipe connection according to one of Claims 4-9, wherein the flow guide (16) comprises a flow guide part (18) which is located close to the outermost shell part (4) and which is designed as widening in the form of a cone or trumpet.

11. Pipe connection according to one of Claims 4-10, wherein the flow guide (16) comprises a plastic material.

12. Pipe connection according to one of the preceding claims, wherein the lining comprises a plastic material (13).

13. Pipe connection provided with a ball joint (1) according to one of the preceding claims, wherein a sleeve (20), (21), to which a respective pipe piece (2) is attached, e.g. by welding, is provided in each case on the connection pieces of the shell parts (3, 4) of the ball joint (1).

## Patentansprüche

1. Rohrverbindung, umfassend ein Kugelgelenk (1) mit Schalenelementen (3, 4), die sich gegenseitig abdichtend umgeben, wobei jedes eine entsprechende longitudinale Mittellinie definiert, und relativ zueinander zwischen einer fluchtenden Position, in der die longitudinalen Mittellinien zusammenfallen, und einer gedrehten Position, in der die longitudinalen Mittellinien miteinander einen Winkel einschließen, der nicht Null ist, drehbar sind, wobei die Schalenelemente zusammen einen axialen Durchgang umschließen, der sich zwischen Hülsen (20,21) der Schalenelementen (3, 4), die voneinander abgewandt sind, sowie einem entsprechenden Rohrstück (2), dass an jeder Hülse (20, 21) angebracht ist, erstreckt, wobei in dem äußersten Schalenelement (4) eine Auskleidung (13) bereitgestellt ist, deren innere Auskleidungsoberfläche (14) eine Krümmung aufweist, welche der Krümmung der äußeren Oberfläche (5) des inneren Schalenelements (3) entspricht, und ein Abdichtungselement (6) bereitgestellt ist, welches mit dem äußersten Schalenelement verbunden ist und verschieblich mit der äußeren Oberfläche des innersten Schalenelements zusammenwirkt, wobei die Auskleidung (13) sich zwischen dem Dichtelement (6) und der Hülse (21) des äußersten Schalenelements (4) erstreckt, **dadurch gekennzeichnet dass**, ein Bügel (8) an dem innersten Schalenelement (3) angebracht ist, wobei der Bügel mit einer Hülse (11) versehen ist, mit einer inneren sphärischen Oberfläche (12) die in Art eines Kugelgelenks mit einer äußeren sphärischen Oberfläche (7) des äußersten Schalenelements (4) zusammenwirkt, wobei die Auskleidungsoberfläche (14) und die äußere Oberfläche (5) des inneren Schalenelements (3) relativ zueinander vollkommen frei liegen.

2. Rohrverbindung nach Anspruch 1, wobei die Auskleidungsoberfläche (14) und die äußere Oberfläche (5) des inneren Schalenelements (3) einen Spalt (15) mit einer im Wesentlichen gleichbleibenden Dicke umschließen.

3. Rohrverbindung nach einem der vorstehenden Ansprüche, wobei die Auskleidungsoberfläche (14) im Wesentlichen sphärisch ist.

4. Rohrverbindung nach einem der vorstehenden Ansprüche, wobei in dem innersten Schalenelement (3) eine Durchflussführung (16) bereitgestellt ist.

5. Rohrverbindung nach Anspruch 4, wobei die Durchflussführung (16) eine zylindrische und/oder sphärische gekrümmte innere Durchflussführungsoberfläche (17, 18) aufweist.

6. Rohrverbindung nach Anspruch 4 oder 5, wobei die Durchflussführung (16) sich über das Ende des inneren Schalenelements (3), welches sich an die Auskleidung (13) anschließt, hinaus erstreckt.

7. Rohrverbindung nach Anspruch 6, wobei die Durchflussführung eine Düse (19) aufweist, die relativ zu der Auskleidungsoberfläche (14) frei liegt.

8. Rohrverbindung nach Anspruch 7, wobei die Düse (19) und die Auskleidungsoberfläche (14) einen Spalt (22) umschließen, dessen Größe im Wesentlichen identisch zu dem Spalt (15) zwischen der Auskleidungsoberfläche (14) und der äußeren Oberfläche (5) des inneren Schalenelements (3) ist.

9. Rohrverbindung nach einem der Ansprüche 4 bis 8, wobei die Durchflussführung (16) ein Durchflussführungselement (17) umfasst, das in der Nähe der Hülse (20) des innersten Schalenelements (3) angeordnet ist und welches im Wesentlichen zylindrisch ist.

10. Rohrverbindung nach einem der Ansprüche 4 bis 9, wobei die Durchflussführung (16) ein Durchflussführungselement (18) umfasst, das in der Nähe des äußersten Schalenelements (4) angeordnet ist und das sich in der Form eines Konus oder einer Trompete vergrößernd ausgelegt ist.

11. Rohrverbindung nach einem der Ansprüche 4 bis 10, wobei die Durchflussführung (16) ein Plastikmaterial umfasst.

12. Rohrverbindung nach einem der vorstehenden Ansprüche, wobei die Auskleidung Plastikmaterial (13) umfasst.

13. Rohrverbindung, versehen mit einem Kugelgelenk (1) nach einem der vorstehenden Ansprüche, wobei eine Hülse (20, 21) an der ein entsprechendes Rohrstück (12), z.B. durch Schweißen, befestigt ist in jeden Fall auf den Verbindungsstücken der Schalenelemente (3, 4) des Kugelgelenks (1) bereitgestellt ist.

## Revendications

1. Raccord de tuyauterie, comprenant un joint sphérique (1) ayant des parties de coque (3, 4) s'entourant l'une l'autre de manière étanche qui définissent chacune une ligne centrale longitudinale respective et qui peuvent tourner l'une par rapport à l'autre entre une position alignée, dans laquelle les lignes centrales longitudinales coïncident, et une position entraînée en rotation dans laquelle les lignes centrales longitudinales forment un angle entre elles qui est différent de zéro, dans lequel les parties de coques ceinturent ensemble un passage axial qui s'étend entre des manchons (20, 21) des parties de coque (3, 4) orientées à l'opposé l'une de l'autre, ainsi qu'une pièce de tuyau respective (2) qui est fixée à chaque manchon (20, 21), dans lequel, dans la partie de coque (4) située le plus à l'extérieur, on prévoit un revêtement (13), dont la surface de revêtement interne (14) a une courbure correspondant à la courbure de la surface externe (5) de la partie de coque interne (3) et un élément d'étanchéité (6) raccordé à la partie de coque située le plus à l'extérieur et fonctionnant de manière mutuellement déplaçable avec la surface externe de la partie de coque située le plus à l'intérieur, est prévu, dans lequel le revêtement (13) s'étend entre l'élément d'étanchéité (6) et le manchon (21) de la partie de coque située le plus à l'extérieur (4), **caractérisé en ce qu'**une fourche (8) est fixée à la partie de coque (3) située le plus à l'intérieur, ladite fourche étant prévue avec une douille (11) avec une surface sphérique interne (12) qui fonctionne à la manière d'un joint à rotule avec une surface sphérique externe (7) de la partie de coque (4) située le plus à l'extérieur, **en ce que** la surface de revêtement (14) et la surface externe (5) de la partie de coque interne (3) sont tout à fait libres l'une par rapport à l'autre.

2. Raccord de tuyauterie selon la revendication 1, dans lequel la surface de revêtement (14) et la surface externe (5) de la partie de coque interne (3) encerclent un espace (15) avec une épaisseur essentiellement uniforme.

3. Raccord de tuyauterie selon l'une des revendications précédentes, dans lequel la surface de revêtement (14) est essentiellement sphérique.

4. Raccord de tuyauterie selon l'une des revendications précédentes, dans lequel un guide d'écoulement (16) est prévu dans la partie de coque (3) située le plus à l'intérieur.

5. Raccord de tuyauterie selon la revendication 4, dans lequel le guide d'écoulement (16) a une surface de guide d'écoulement interne (17, 18) incurvée de manière cylindrique et/ou sphérique.

6. Raccord de tuyauterie selon la revendication 4 ou 5, dans lequel le guide d'écoulement (16) s'étend au-delà de l'extrémité de la partie de coque interne (3) qui est attenante au revêtement (13).

7. Raccord de tuyauterie selon la revendication 6, dans lequel le guide d'écoulement a une buse (19) qui est libre par rapport à la surface de revêtement (14).

8. Raccord de tuyauterie selon la revendication 7, dans lequel la buse (19) et la surface de revêtement (14) encerclent un espace (22), dont la taille est essentiellement identique à l'espace (15) entre la surface de revêtement (14) et la surface externe (5) de la partie de coque interne (3).

9. Raccord de tuyauterie selon l'une des revendications 4 à 8, dans lequel le guide d'écoulement (16) comprend une partie de guidage d'écoulement (17) qui est positionnée à proximité du manchon (20) de la partie de coque (3) située le plus à l'intérieur et qui est essentiellement cylindrique.

10. Raccord de tuyauterie selon l'une des revendications 4 à 9, dans lequel le guide d'écoulement (16) comprend une partie de guidage d'écoulement (18) qui est positionnée à proximité de la partie de coque (4) située le plus à l'extérieur et qui est conçue comme s'élargissant sous la forme d'un cône ou d'une trompette.

11. Raccord de tuyauterie selon l'une des revendications 4 à 10, dans lequel le guide d'écoulement (16) comprend une matière plastique.

12. Raccord de tuyauterie selon l'une des revendications précédentes, dans lequel le revêtement comprend une matière plastique (13).

13. Raccord de tuyauterie prévu avec un joint sphérique (1) selon l'une des revendications précédentes, dans lequel un manchon (20), (21) auquel une pièce de tuyau (2) respective est fixée, par exemple par soudage, est prévu dans chaque cas sur les pièces de raccord des parties de coque (3, 4) du joint sphérique (1).
